Europäisches Patentamt

European Patent Office

Office européen des brevets

(19)

(11) **EP 1 431 579 A1**

(12) **EUROPEAN PATENT APPLICATION**
published in accordance with Art. 158(3) EPC

(43) Date of publication:
23.06.2004 Bulletin 2004/26

(51) Int Cl.7: **F04B 35/01**

(21) Application number: 02770225.7

(86) International application number:
**PCT/JP2002/010040**

(22) Date of filing: 27.09.2002

(87) International publication number:
**WO 2003/029655 (10.04.2003 Gazette 2003/15)**

(84) Designated Contracting States:
**AT BE BG CH CY CZ DE DK EE ES FI FR GB GR IE IT LI LU MC NL PT SE SK TR**

(30) Priority: 27.09.2001 JP 2001297360

(71) Applicant: **Kabushiki Kaisha Toyota Jidoshokki Kariya-shi, Aichi 448-8671 (JP)**

(72) Inventors:
 • **KANAI, Akinobu, c/o K. K. TOYOTA JIDOSHOKKI Kariya-shi, Aichi 448-8671 (JP)**
 • **KAWAGUCHI, Masahiro, c/o K. K. TOYOTA JIDOSHOKKI Kariya-shi, Aichi 448-8671 (JP)**
 • **OTA, Masaki, c/o K. K. TOYOTA JIDOSHOKKI Kariya-shi, Aichi 448-8671 (JP)**
 • **ADANIYA, Taku, c/o K. K. TOYOTA JIDOSHOKKI Kariya-shi, Aichi 448-8671 (JP)**
 • **MINAMI, Kazuhiko, c/o K. K. TOYOTA JIDOSHOKKI Kariya-shi, Aichi 448-8671 (JP)**
 • **TANAKA, Hirohiko, c/o K. K. TOYOTA JIDOSHOKKI Kariya-shi, Aichi 448-8671 (JP)**

(74) Representative:
**Leson, Thomas Johannes Alois, Dipl.-Ing. Tiedtke-Bühling-Kinne & Partner GbR, TBK-Patent, Bavariaring 4 80336 München (DE)**

(54) **COMPRESSOR**

(57) A compressor includes a compressor main body and a power transmission mechanism. The power transmission mechanism includes a pulley and a hub. The pulley has a first inner cylinder and a second inner cylinder, which are apart from each other in the axial direction of the pulley. A one-way clutch is located on a power transmission path between the first inner cylinder and the hub. A bearing is located between the first inner cylinder and the hub. A bearing is located between the second inner cylinder and a housing of the compressor main body. A power transmission pin for discontinuing an excessive power transmission is located on a power transmission path between an engine of a vehicle and a drive shaft.

**Fig.4**

## EP 1 431 579 A1

**Description**

TECHNICAL FIELD

The present invention relates to a compressor that is driven selectively by an external drive source and an electric part.

BACKGROUND ART

Japanese Laid-Open Patent Publication No. 2001-140757 discloses a hybrid compressor for a vehicle that is driven by an electric part, which is a motor, while the external drive source, which is an engine of the vehicle, is stopped.

The hybrid compressor includes a drive shaft and a compression mechanism, which is driven by the drive shaft. A rotary body is secured to the drive shaft to rotate integrally with the drive shaft. The rotary body supports a pulley via a bearing such that the pulley rotates relative to the rotary body. The rotary body has a rotor, which forms part of the motor so that the drive shaft is rotated by the motor. A one-way clutch is located on a power transmission path between the pulley and the rotary body. The one-way clutch permits power transmission from the pulley to the rotary body such that rotational force in only one direction is transmitted. Accordingly, although the engine for traveling is stopped, the compression mechanism is driven by the motor. When the motor drives the compression mechanism, the power of the motor is prevented from being transmitted to the engine.

The one-way clutch eliminates the need to use an electromagnetic clutch for selectively permitting and discontinuing power transmission between the pulley and the rotary body, which simplifies the structure of the compressor. However, in the case the one-way clutch is used, if an abnormality, such as a dead lock, occurs in the compression mechanism while the compression mechanism is driven by the engine, an excessive load is applied to the engine.

DISCLOSURE OF THE INVENTION

Accordingly, it is an objective of the present invention to provide a compressor that reduces weight, size, and cost, and prevents an excessive load from being applied to an external drive source when the compressor has an abnormality.

To achieve the above objective, the present invention provides a compressor, which includes a compressor main body, an electric part, a first rotating body, a second rotating body, a first cylinder, a second cylinder, a one-way clutch, a first ball bearing, a second ball bearing, and a discontinuing mechanism. The compressor main body includes a housing and a drive shaft, which is supported by the housing. The compressor main body compresses refrigerant in accordance with rotation of the drive shaft. The electric part at least functions as a motor. The first rotating body is rotated by an external drive source. The second rotating body is secured to the drive shaft to rotate integrally with the drive shaft. The second rotating body is operably coupled to the first rotating body and power is directly transmitted from the electric part to the second rotating body. The first cylinder and the second cylinder are located on the first rotating body. The first cylinder and the second cylinder are apart from each other. The one-way clutch is located on a power transmission path between the first cylinder and the second cylinder. The first ball bearing is located between the first cylinder and the second rotating body. The second ball bearing is located between the second cylinder and the housing. The discontinuing mechanism is located on a power transmission path between the external drive source and the drive shaft and discontinues excessive torque transmission from the external drive source to the drive shaft.

BRIEF DESCRIPTION OF THE DRAWINGS

Fig. 1 is a cross-sectional view illustrating a compressor according to a first embodiment of the present invention;
Fig. 2 is a cross-sectional view illustrating the control valve of the compressor shown in Fig. 1;
Fig. 3 is a cross-sectional view for explaining the movement of the operating rod of the control valve shown in Fig. 2;
Fig. 4 is an enlarged cross-sectional view illustrating the power transmission mechanism of the compressor shown in Fig. 1;
Fig. 5(a) is a front view illustrating a downstream pulley member according to a second embodiment of the present invention;
Fig. 5(b) is a cross-sectional view illustrating a power transmission mechanism according to a second embodiment;
Figs. 6(a) and 6(b) are partial cross-sectional views illustrating the one-way clutch according to the first embodiment; and

Fig. 7 is a partial cross-sectional view illustrating a power transmission mechanism according to a modified embodiment.

BEST MODE FOR CARRYING OUT THE INVENTION

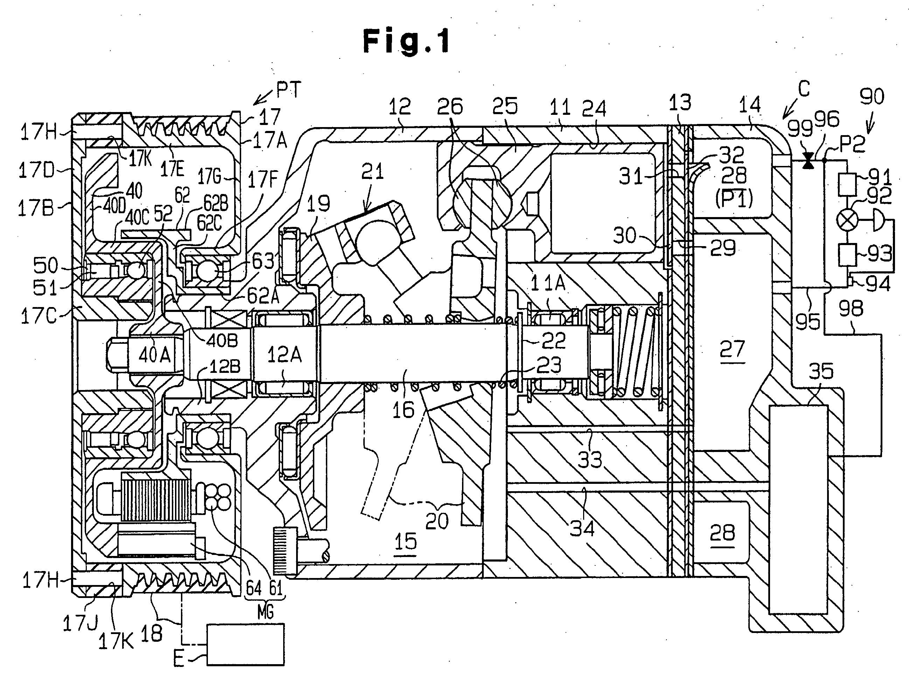

A first embodiment of the present invention will now be described with reference to Figs. 1 to 4, 6(a), and 6 (b). The left side of Fig. 1 is defined as the front end of the compressor, and the right side of Fig. 1 is defined as the rear end of the compressor.

As shown in Fig. 1, a compressor main body C, which forms part of a vehicular air conditioner, includes a cylinder block 11, a front housing member 12, and a rear housing member 14. The front housing member 12 is secured to the front end of the cylinder block 11. The rear housing member 14 is attached to the rear end of the cylinder block 11 with a valve plate assembly 13 located in between. The cylinder block 11, the front housing member 12, the valve plate assembly 13, and the rear housing member 14 form a housing assembly of the compressor main body C.

The cylinder block 11 and the front housing member 12 define a control pressure zone, which is a crank chamber 15. The housing assembly of the compressor main body C rotatably supports a drive shaft 16, which extends through the crank chamber 15. The front end of the drive shaft 16 is supported by a radial bearing 12A, which is secured to the front wall of the front housing member 12. The rear end of the drive shaft 16 is supported by a radial bearing 11A, which is secured to the cylinder block 11.

The front end of the drive shaft 16 projects outside through the front wall of the front housing member 12. The front end of the drive shaft 16 is operably coupled to an external drive source, which is an engine E of a vehicle in the first embodiment, via a power transmission mechanism PT and a belt 18. The belt 18 is wound about a first rotating body, which is a pulley 17 in the first embodiment. The pulley 17 forms part of the power transmission mechanism PT. The power transmission mechanism PT and the compressor main body C form the compressor.

An electric part, which is a motor generator MG in the first embodiment, is located between the pulley 17 and the drive shaft 16 in a power transmission path between the engine E of the vehicle and the drive shaft 16. The motor generator MG is formed by an induction machine and functions as a motor and a generator. In the first embodiment, when the engine E of the vehicle is running, power from the engine E is always transmitted to the drive shaft 16 and the motor generator MG. At this time, the motor generator MG functions as a generator. If air conditioning is necessary when the engine E of the vehicle is stopped, the motor generator MG functions as a motor to rotate the drive shaft 16.

A lug plate 19 is located in the crank chamber 15 and is secured to the drive shaft 16 to rotate integrally with the drive shaft 16. A drive plate, which is a swash plate 20 in the first embodiment, is located in the crank chamber 15. The swash plate 20 is supported on the drive shaft 16, and slides along and inclines with respect to the drive shaft 16. The swash plate 20 is coupled to the lug plate 19 via a hinge mechanism 21. The hinge mechanism 21 causes the swash plate 20 to rotate integrally with the lug plate 19 and the drive shaft 16, and permits the swash plate 20 to slide in the axial direction of the drive shaft 16 and incline with respect to the drive shaft 16.

The minimum inclination angle of the swash plate 20 is determined by a ring 22, which is secured to the drive shaft 16, and a spring 23, which is located between the ring 22 and the swash plate 20. The swash plate 20 is movable between a minimum inclination angle position indicated by a solid line in Fig. 1, and a maximum inclination angle position indicated by a chain double-dashed line in Fig. 1. When the swash plate 20 is located at the minimum inclination angle position, the angle between the swash plate 20 and a surface that is perpendicular to the axis of the drive shaft 16 is closest to zero.

Cylinder bores 24 (only one shown) are formed in the cylinder block 11. The cylinder bores 24 extend along the drive shaft 16 and are arranged about the axis of the drive shaft 16 at equal angular intervals. A single headed piston 25 is accommodated in each cylinder bore 24 to reciprocate in the cylinder bore 24. Both ends of each cylinder bore 24 are closed by the valve plate assembly 13 and the corresponding piston 25. Each cylinder bore 24 defines a compression chamber the volume of which varies in accordance with the reciprocation of the corresponding piston 25. Each piston 25 is coupled to the peripheral portion of the swash plate 20 by a pair of shoes 26. Therefore, when the swash plate 20 rotates with the drive shaft 16, the shoes 26 convert the rotation of the swash plate 20 into reciprocation of the pistons 25.

The cylinder block 11, the drive shaft 16, the lug plate 19, the swash plate 20, the hinge mechanism 21, the pistons 25, and the shoes 26 form a compression mechanism of a variable displacement piston type compressor.

The rear housing member 14 defines a suction pressure zone, which is a suction chamber 27, and a discharge pressure zone, which is a discharge chamber 28. The openings of the suction chamber 27 and the discharge chamber 28 that face the valve plate assembly 13 are closed by the valve plate assembly 13. The valve plate assembly 13 has suction ports 29, suction valve flaps 30, discharge ports 31, and discharge valve flaps 32. Each set of the suction port 29, the suction valve flap 30, the discharge port 31, and the discharge valve flap 32 corresponds to one of the cylinder bores 24. When each piston 25 moves from the top dead center position to the bottom dead center position, refrigerant gas in the suction chamber 27 is drawn into the corresponding cylinder bore 24 via the corresponding suction port 29 and suction valve flap 30. When each piston 25 moves from the bottom dead center position to the top dead center position, refrigerant gas in the corresponding cylinder bore 24 is compressed to a predetermined pressure and is discharged to the discharge chamber 28 via the corresponding discharge port 31 and discharge valve flap 32.

A crank chamber pressure control mechanism controls the internal pressure of the crank chamber 15, or a crank pressure Pc, to control the inclination angle of the swash plate 20. The crank chamber pressure control mechanism is formed by a bleed passage 33, a supply passage (34, 96, 98), and a control valve 35. The bleed passage 33 is formed in the housing assembly of the compressor main body C to connect the suction chamber 27 to the crank chamber 15. The supply passage (34, 96, 98) connects the crank chamber 15 to the discharge chamber 28. The control valve 35 is located in the supply passage (34, 96, 98). The supply passage (34, 96, 98) includes a pipe 96, a second pressure introduction passage 98, and a communication passage 34. The pipe 96 is connected to an outlet of the discharge chamber 28. The second pressure introduction passage 98 extends from a second pressure monitoring point P2 located in the pipe 96 to the control valve 35. The communication passage 34 extends from the control valve 35 to the crank chamber 15.

Refrigerant in the crank chamber 15 is released into the suction chamber 27 through the bleed passage 33. On the other hands, the control valve 35 adjusts the flow rate of refrigerant supplied to the crank chamber 15 from the discharge chamber 28 through the supply passage (34, 96, 98). In accordance with a change in the crank pressure Pc, the difference between the crank pressure Pc and the pressure in each cylinder bore 24 is changed, which alters the inclination angle of the swash plate 20. As a result, the stroke of each piston 25, that is, the discharge displacement (displacement of the compressor main body C) per one rotation of the drive shaft 16, is controlled. In the compressor main body C of the first embodiment, the discharge displacement per one rotation of the drive shaft 16 approaches zero when the swash plate 20 is located at the minimum inclination angle position.

The suction chamber 27 and the discharge chamber 28 are connected to each other by an external refrigerant circuit 90. The compressor main body C and the external refrigerant circuit 90 form the refrigerant circuit of the vehicular air-conditioner. The external refrigerant circuit 90 includes a condenser 91, a decompression device, which is a temperature type expansion valve 92 in this embodiment, and an evaporator 93. The opening degree of the expansion valve 92 is feedback controlled based on the temperature of the refrigerant detected by a heat sensitive tube 94, which is located at the outlet or downstream of the evaporator 93, or the pressure at the outlet of the evaporator 93. The expansion valve 92 supplies appropriate amount of liquid refrigerant to the evaporator 93 in accordance with the heat load applied to the refrigerant circuit to adjust the flow rate of refrigerant in the external refrigerant circuit 90.

The external refrigerant circuit 90 includes a pipe 95, or a low pressure passage, which connects the outlet of the evaporator 93 to the suction chamber 27 of the compressor main body C. The low pressure passage and the suction chamber 27 form a low pressure zone. The external refrigerant circuit 90 also includes the pipe 96, or a high pressure passage, which connects the discharge chamber 28 of the compressor main body C to the inlet of the condenser 91. The high pressure passage and the discharge chamber 28 form a high pressure zone. The compressor main body C draws in and compresses refrigerant gas that is introduced into the suction chamber 27 from the low pressure passage and discharges the compressed gas to the discharge chamber 28, which is connected to the high pressure passage.

As the flow rate of refrigerant (refrigerant flow rate Q) that flows through the refrigerant circuit increases, the pressure loss per unit length of the circuit or the pipe increases. That is, the pressure loss between the pressure monitoring points P1 and P2 located in the refrigerant circuit has a positive correlation with the refrigerant flow rate Q in the refrigerant circuit. A primary pressure $\Delta$PX, which is the pressure loss between two pressure monitoring points P1 and P2, that is, the difference between the pressure PdH at the first pressure monitoring point P1 and the pressure PdL at the second pressure monitoring point P2, reflects the refrigerant flow rate Q in the refrigerant circuit.

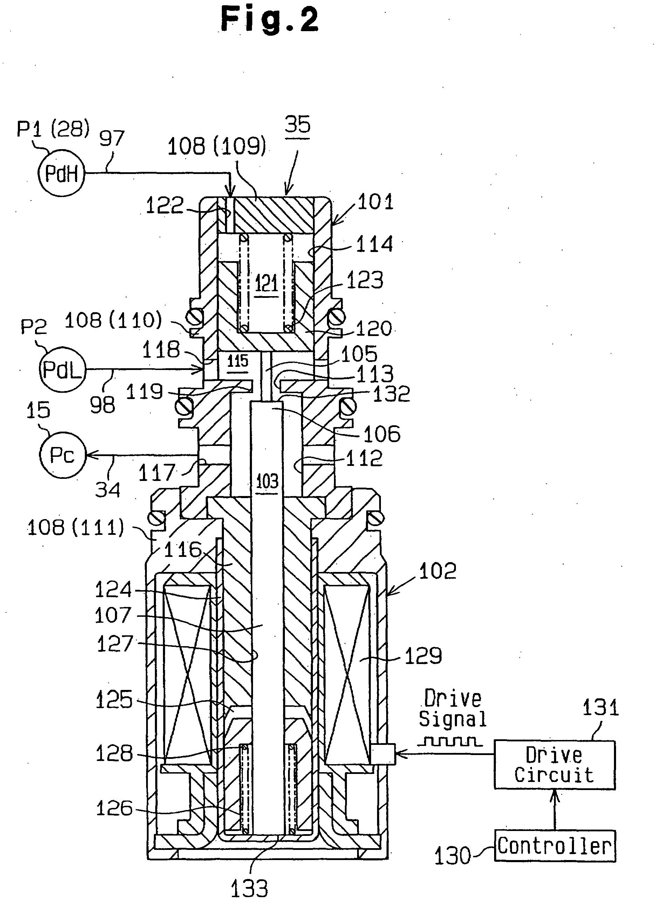

In the first embodiment, the first pressure monitoring point P1 for monitoring high pressure in the upstream side is located in the discharge chamber 28, which corresponds to the most upstream section of the pipe 96. The second pressure monitoring point P2 for monitoring low pressure in the downstream side is located in the pipe 96 apart from the first pressure monitoring point P1 by a predetermined distance. The pressure PdH at the first pressure monitoring point P1 is introduced to the control valve 35 through a first pressure introduction passage 97 (shown in Fig. 2 only) and the pressure PdL at the second pressure monitoring point P2 is introduced to the control valve 35 through the second pressure introduction passage 98.

Pressure difference increasing means for clarifying or increasing the primary pressure $\Delta$PX, or a fixed restrictor 99, is located in the pipe 96 between the pressure monitoring points P1 and P2. Since the fixed restrictor 99 is located between the pressure monitoring points P1 and P2, the pressure monitoring points P1 and P2 need not be separated from each other by a large amount. Therefore, the second pressure monitoring point P2 can be located close to the compressor main body C, which shortens the second pressure introduction passage 98 between the second pressure monitoring point P2 and the control valve 35. Although the pressure PdL at the second pressure monitoring point P2 is decreased compared to the pressure PdH at the first pressure monitoring point P1 by the operation of the fixed restrictor 99, the pressure PdL is sufficiently higher than the crank pressure Pc.

As shown in Fig. 2, the control valve 35 includes an inlet valve portion 101, which forms the upper half of the control valve 35, and a solenoid portion 102, which forms the lower half of the control valve 35. The inlet valve portion 101 adjusts the opening degree, or the restricting degree, of the supply passage, which connects the second pressure monitoring point P2 to the crank chamber 15. The solenoid portion 102 is an electromagnetic actuator for urging the operating rod 103 located inside the control valve 35 based on the external current supply control. The operating rod 103 includes a coupling portion 105, which is the distal end, a valve body 106, which is located at the substantial center, and a guide rod portion 107, which is the proximal end. The valve body 106 forms part of the guide rod portion 107. Assuming that the diameter of the coupling portion 105 is represented by d1, the diameter of the guide rod portion 107 is represented by d2, d1 is smaller than d2. Assuming that the circle ratio is $\pi$, the cross-sectional area SB of the coupling portion 105 is represented by $\pi(d1/2)^2$, and the cross-sectional area SD of the guide rod portion 107 is represented by $\pi(d2/2)^2$.

A valve housing 108 of the control valve 35 includes a cap 109, an upper half main body 110, which forms the main outline of the inlet valve portion 101, and a lower half main body 111, which forms the main outline of the solenoid portion 102. A valve chamber 112 and a communication passage 113 are defined in the upper half main body 110 of the valve housing 108. A pressure sensing chamber 114 is defined between the upper half main body 110 and the cap 109, which is inserted in the upper portion of the upper half main body 110. The operating rod 103 is located inside the valve chamber 112, the communication passage 113, and a pressure sensing chamber 114 and is movable in the axial direction (vertical direction in Fig. 2). The valve chamber 112 and the communication passage 113 are selectively communicated in accordance with the position of the operating rod 103. The communication passage 113 and part of the pressure sensing chamber 114 (second pressure chamber 115, which will be described later) are always communicated.

The bottom wall of the valve chamber 112 is formed by the upper end of a fixed iron core 116, which will be described later. A port 117 is formed in the circumferential wall of the valve housing 108, which surrounds the valve chamber 112. The port 117 connects the valve chamber 112 to the crank chamber 15 via the communication passage 34, which is the downstream section of the supply passage. A port 118 is formed in the circumferential wall of the valve housing 108, which surrounds the pressure sensing chamber 114 (the second pressure chamber 115). The port 118 connects the communication passage 113 to the second pressure monitoring point P2 via the pressure sensing chamber 114 (the second pressure chamber 115) and the second pressure introduction passage 98, which is the upstream section of the supply passage. The port 117, the valve chamber 112, the communication passage 113, the pressure sensing chamber 114 (the second pressure chamber 115), and the port 118 form a passage inside the control valve, and the passage inside the control valve forms part of the supply passage.

The valve body 106 of the operating rod 103 is located inside the valve chamber 112. The inner diameter d3 of the communication passage 113 is greater than the diameter d1 of the coupling portion 105 of the operating rod 103 and is smaller than the diameter d2 of the guide rod portion 107. That is, the cross-sectional area (opening area) SC of the communication passage 113 is $\pi(d3/2)^2$, and the opening area SC is greater than the cross-sectional area SB of the coupling portion 105 and is smaller than the cross-sectional area SD of the guide rod portion 107. Therefore, a step located between the valve chamber 112 and the communication passage 113 function as a valve seat 119 and the communication passage 113 function as a valve hole. When the operating rod 103 moves from the lowermost position shown in Fig. 2 to the uppermost position at which the valve body 106 contacts the valve seat 119, the communication passage 113 is disconnected. The valve body 106 of the operating rod 103 moves in the axial direction to adjust the opening degree of the supply passage.

A first pressure sensing member, which is a movable wall 120 in the first embodiment, is located in the pressure sensing chamber 114 and is movable in the axial direction. The movable wall 120 is cup-shaped. The bottom wall of the movable wall 120 divides the pressure sensing chamber 114 into a high pressure chamber, which is a first pressure chamber 121 in the first embodiment, and a low pressure chamber, which is a second pressure chamber 115 in the first embodiment. The movable wall 120 serves as a partition between the first pressure chamber 121 and the second pressure chamber 115. The movable wall 120 does not permit fluid to directly move between the first pressure chamber 121 and the second pressure chamber 115. The cross-sectional area SA of the movable wall 120 is greater than the opening area SC of the communication passage 113.

The first pressure chamber 121 is always communicated with the first pressure monitoring point P1, which is the discharge chamber 28, via a port 122, which is formed in the cap 109 and the first pressure introduction passage 97. On the other hand, the second pressure chamber 115 is always communicated with the second pressure monitoring point P2 via the port 118, which is part of the supply passage, and the second pressure introduction passage 98. That is, the pressure PdH at the first pressure monitoring point P1 is introduced into the first pressure chamber 121, and the pressure PdL at the second pressure monitoring point P2 is introduced into the second pressure chamber 115. Therefore, the upper and lower surfaces of the movable wall 120 serve as pressure receiving surfaces that are exposed to the pressures PdH and PdL, respectively. The movable wall 120 is displaced in accordance with the difference (the primary $\Delta PX$) between the pressure PdH and the pressure PdL.

The distal end of the coupling portion 105 of the operating rod 103 enters the second pressure chamber 115. The distal end of the coupling portion 105 is attached to the movable wall 120. The first pressure chamber 121 accommodates a return spring 123. The return spring 123 urges the movable wall 120 from the first pressure chamber 121 toward the second pressure chamber 115.

The solenoid portion 102 includes a cup-shaped cylinder 124. A fixed iron core 116 is fitted in the upper portion of the cylinder 124 so that a solenoid chamber 125 is defined in the cylinder 124. A plunger, which is a movable iron core 126 in the first embodiment, is accommodated in the solenoid chamber 125 and is movable in the axial direction. A guide hole 127 is formed at the center of the fixed iron core 116 and extends in the axial direction. A guide rod portion 107 of the operating rod 103 is located in the guide hole 127 and is movable in the axial direction. A little space (not shown) is formed between the inner circumferential surface of the guide hole 127 and the guide rod portion 107. The valve chamber 112 and the solenoid chamber 125 are connected to each other via the space. That is, the solenoid chamber 125 is exposed to the crank pressure Pc that is the same as the crank pressure Pc in the valve chamber 112.

The proximal end of the operating rod 103 is accommodated in the solenoid chamber 125. That is, the lower end of the guide rod portion 107 is located inside the solenoid chamber 125 and is fitted and calked to a hole made through the center of the movable iron core 126. Therefore, the movable iron core 126 and the operating rod 103 integrally move in the vertical direction. The solenoid chamber 125 accommodates a shock absorbing spring 128, which urges the movable iron core 126 toward the fixed iron core 116. In other words, the shock absorbing spring 128 urges the movable iron core 126 and the operating rod 103 upward. The force of the shock absorbing spring 128 is smaller than the force of the return spring 123. The return spring 123 functions as restore means for returning the movable iron core 126 and the operating rod 103 to the lowermost position when the solenoid portion 102 is de-excited.

A coil 129 is wound about the fixed iron core 116 and the movable iron core 126. A drive signal is sent to the coil 129 from a drive circuit 131 based on a command from a controller 130. The coil 129 generates an electromagnetic force the magnitude of which corresponds to the value of current supplied to the coil 129. The electromagnetic force attracts the movable iron core 126 toward the fixed iron core 116, which urges the operating rod 103 upward. The current supplied to the coil 129 is controlled by adjusting the applied voltage to the coil 129. The applied voltage is generally controlled by means for changing the voltage or means that utilizes pulse-width modulation. The pulse-width modulation is a method for adjusting the average voltage by applying a pulse voltage having a constant cycle and changing the on time of the pulse. The applied voltage is represented by the pulse voltage multiplied by the on time of the pulse divided by the pulse cycle. The on time of the pulse divided by the pulse cycle is referred to as a duty ratio. The voltage control that makes use of the pulse width modulation is sometimes referred to as a duty control. When the pulse width modulation is employed, the current intermittently varies, which reduces the hysteresis of the electromagnet. It is also common to measure the value of current that flows through the coil 129, and feedback control the applied voltage based on the measured current value. In the first embodiment, the duty control is employed. Due to the structure of the control valve 35, a smaller duty ratio increases the opening degree of the control valve 35. A greater duty ratio decreases the opening degree of the control valve 35.

The opening degree of the control valve shown in Fig. 2 is determined by the axial position of the operating rod 103, which includes the valve body 106. The operating conditions and the characteristics of the control valve 35 will become apparent by considering, in a comprehensive manner, the forces that act on each part of the operating rod 103.

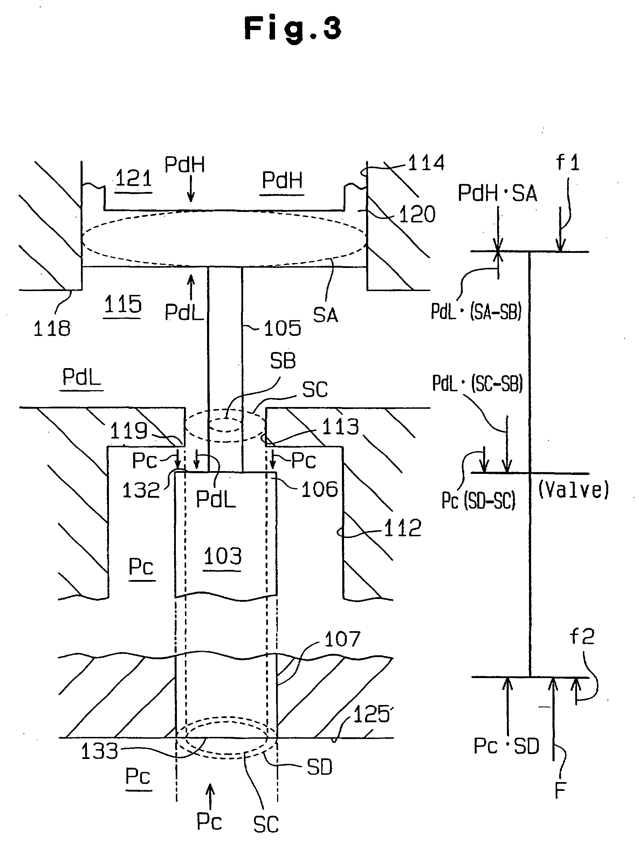

As shown in Fig. 3, a downward force f1 of the return spring 123 and a downward force based on the primary pressure ΔPX, which is the difference between the pressure PdH and the pressure PdL applied to the movable wall 120, act on the coupling portion 105 of the operating rod 103. The pressure receiving area of the upper surface of the movable wall 120 is represented by SA but the pressure receiving area of the lower surface of the movable wall 120 is represented by (SA - SB). Assume that downward direction is defined as the positive direction. The sum ΣF1 of the forces that act on the coupling portion 105 is expressed by the following equation I.

(Equation I)

$$\Sigma F1 = PdH \times SA - PdL(SA - SB) + f1$$

On the other hand, an upward force f2 of the shock-absorbing spring 128 and an upward electromagnetic force F, which is generated by the solenoid portion 102, act on the guide rod portion 107 of the operating rod 103. The pressures applied to all the exposed surfaces of the valve body 106, the guide rod portion 107, and the movable iron core 126 are simplified as follows. First, the upper end surface 132 of the valve body 106 is divided into the inner circumferential section and the outer circumferential section by an imaginary cylinder (shown by two broken lines in Fig. 3), which extends from the inner circumferential surface of the communication passage 113. The pressure PdL acts in a downward direction on the inner circumferential section (area: SC - SB). The crank pressure Pc acts in a downward direction on the outer circumferential section (area: SD - SC). Taking the pressure balance between the upper and lower surfaces of the movable iron core 126 into account, the crank pressure Pc in the solenoid chamber 125 urges the lower end surface 133 of the guide rod portion 107 upward by the area corresponding to the cross-sectional area SD of the guide rod portion 107. Assume that the upward direction is defined as the positive direction. The sum ΣF2 of the forces that act on the valve body 106 and the guide rod portion 107 is expressed by the following equation II.

$$\text{(Equation II)}$$
$$\Sigma F2 = F + f2 - PdL(SC - SB) - Pc(SD - SC) + Pc \times SD$$
$$= F + f2 + Pc \times SC - PdL(SC - SB)$$

In the process of calculating the equation II, $-Pc \times SD$ was canceled by $+Pc \times SD$, and the term $Pc \times SC$ remained. This means that the effective pressure receiving area of the guide rod portion 107, which includes the valve body 106, related to the crank pressure Pc can be expressed as SD - (SD - SC) = SC when considering on the assumption that the crank pressure Pc intensively acts on only the lower end surface 133 of the guide rod portion 107 when the crank pressure Pc acts on the upper and lower end surfaces 132, 133 of the guide rod portion 107. As far as the crank pressure Pc is concerned, the effective pressure receiving area of the guide rod portion 107 is equal to the opening area SC of the communication passage 113 regardless of the cross-sectional area SD of the guide rod portion 107. In this specification, when pressures of the same kind act on both ends of a member such as a rod, the pressure receiving area having an effect that can be assumed that the pressure acts intensively on one end only is called the "effective pressure receiving area"

Since the operating rod 103 is an integrated member formed by connecting the coupling portion 105 to the guide rod portion 107, its axial position is determined by the dynamic balance of ΣF1 = ΣF2. After the equation ΣF1 = ΣF2 is sorted, the following equation III is obtained.

$$\text{(Equation III)}$$
$$F - f1 + f2 = (PdH - PdL)SA + (PdL - Pc)SC$$

In the Equation III, f1, f2, SA, SC are parameters that are defined in the steps of mechanical design. The electromagnetic force F is a variable parameter that changes in accordance with the power supplied to the coil 129. The pressure PdH, PdL and the crank pressure Pc are variable parameters that change in accordance with the driving condition of the compressor. As apparent from equation III, the control valve 35 automatically controls the opening degree such that gas pressure load obtained by multiplying the primary pressure ΔPX, or PdH-PdL, and a secondary pressure ΔPY, or PdL-Pc, by the corresponding pressure receiving area and the total load of the force f1 and f2 of the electromagnetic force F and the spring 123, 128 are balanced. The operating rod 103 is a second pressure sensing member, which is displaced in accordance with the pressure difference between the pressure PdL and the crank pressure Pc.

In the control valve 35 according to the first embodiment having the above mentioned operating characteristics, the opening degree is determined in the following manner under each circumstance. When no current is supplied to the coil 129, or when the duty ratio is zero percent, the force of the return spring 123 (more specifically, the force of f1 - f2) becomes dominant and positions the operating rod 103 at the lowermost position shown in Fig. 2. The valve body 106 is spaced from the valve seat 119 by the greatest distance, which fully opens the inlet valve portion 101. When a current of the minimum duty ratio within a variable range of the duty ratio is supplied to the coil 129, the upward electromagnetic force F is at least greater than the downward force f2 of the return spring 123. The sum of the upward electromagnetic force F generated by the solenoid portion 102 and the upward force f2 of the shock-absorbing spring 128 acts against the sum of the downward force f1 of the return spring 123 and the downward force based on the secondary pressure ΔPY and the primary pressure ΔPX. As a result, the position of the valve body 106 relative to the valve seat 119 is determined such that equation III is satisfied, which determines the opening degree of the control valve 35. Accordingly, the flow rate of gas to the crank chamber 15 through the supply passage is determined. Then, the crank pressure Pc is adjusted in accordance with the relationship between the flow rate of gas through the supply passage and the flow rate of gas flowing out from the crank chamber 15 through the bleed passage 33.

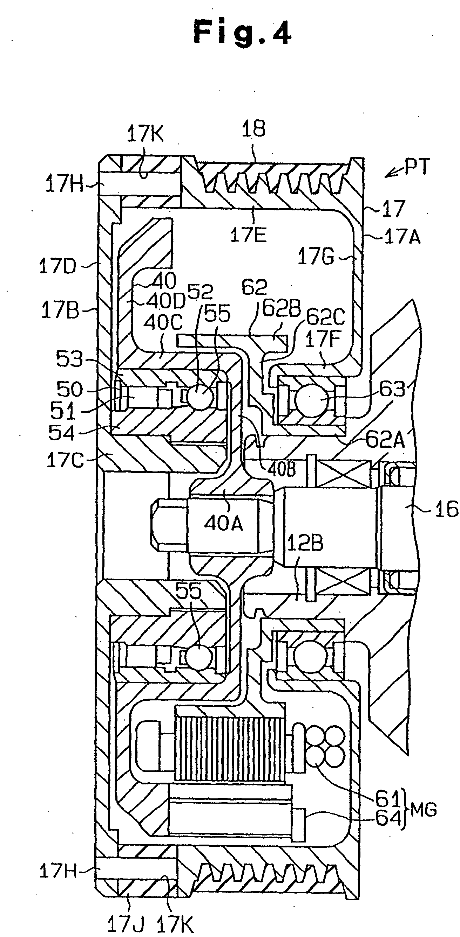

As shown in Figs. 1 and 4, the pulley 17 includes an upstream rotating body, which is an upstream pulley member 17A, and a downstream rotating body, which is a downstream pulley member 17B. The downstream pulley member 17B is formed by a first cylinder, which is a first inner cylinder 17C, and a first disk-like portion 17D, which is integrally formed with the front end of the first inner cylinder 17C and extends radially outward. The upstream pulley member 17A is formed by an outer cylinder 17E, about which the belt 18 is wound, a second cylinder, which is a second inner cylinder 17F, and a second disk-like portion 17G, which is integrally formed with the outer cylinder 17E and the second inner cylinder 17F to couple the outer cylinder 17E and the second inner cylinder 17F with each other.

Breakable members, which are columnar power transmission pins 17H (only two are shown) are secured to the peripheral portion of the first disk-like portion 17D at equal angular intervals about the axis of the first disk-like portion 17D. The power transmission pins 17H are fitted in through holes formed in the peripheral portion. The power transmission pins 17H project rearward and extends substantially parallel to the axial direction of the drive shaft 16. The power transmission pins 17H form a discontinuing mechanism on a power transmission path between the engine E and the drive shaft 16 for preventing excessive power transmission. In the first embodiment, the power transmission pins 17H are formed by sintered metal. The sintered metal has the fatigue ratio $\sigma_W/\sigma_B$ of approximately 0.5. $\sigma_W$ represents the fatigue strength and $\sigma_B$ represents the tensile strength.

An annular elastic member, which is a rubber damper 17J is attached to the front end of the outer cylinder 17E of the upstream pulley member 17A to extend along the circumferential direction of the upstream pulley member 17A. Through holes 17K are formed in the rubber damper 17J at positions corresponding to the power transmission pins 17H. Each power transmission pin 17H is fitted in one of the through holes 17K. Therefore, in the pulley 17 according to the first embodiment, the power that is transmitted to the upstream pulley member 17A via the belt 18 is transmitted to the downstream pulley member 17B via the rubber damper 17J and the power transmission pins 17H. That is, the rubber damper 17J and the power transmission pins 17H are located on the power transmission path between the upstream pulley member 17A and the downstream pulley member 17B.

In the first embodiment, the upstream pulley member 17A, the downstream pulley member 17B, the power transmission pins 17H, and the rubber damper 17J form the pulley 17. The first inner cylinder 17C and the second inner cylinder 17F are substantially coaxial and are apart from each other in the axial direction. The pulley 17 has an internal space surrounded by the upstream pulley member 17A and the downstream pulley member 17B.

A second rotating body, which is a hub 40 in the first embodiment, is secured to the front end of the drive shaft 16. The hub 40 has a cylindrical support portion 40A and a disk-like portion 40B, which is integrally formed with the support portion 40A and extends radially outward. The support portion 40A has a female screw portion, which is screwed to a male screw portion formed at the front end of the drive shaft 16. The hub 40 has a cylindrical portion 40C, which is integrally formed with the disk-like portion 40B and extends forward from the periphery of the disk-like portion 40B, and a substantially disk-like flange 40D, which is integrally formed with the cylindrical portion 40C and extends radially outward from the front end of the cylindrical portion 40C.

The support portion 40A is located radially inward of the inner cylinders 17C, 17F, that is, closer to the axis of the drive shaft 16. The disk-like portion 40B is located between the inner cylinders 17C, 17F in the axial direction of the drive shaft 16. The cylindrical portion 40C is located radially outward of the first inner cylinder 17C.

A one-way clutch unit 50 is located between the cylindrical portion 40C and the first inner cylinder 17C. The one-way clutch unit 50 includes a one-way clutch 51 and a first ball bearing, which is a bearing 52 in the first embodiment. The bearing 52 is located at the rear of the one-way clutch 51.

The one-way clutch unit 50 has an outer ring 53, which is secured to the inner circumferential surface of the cylindrical portion 40C, and an inner ring 54, which is secured to the outer circumferential surface of the first inner cylinder 17C and is arranged such that the inner ring 54 is surrounded by the outer ring 53. The bearing 52 includes rolling elements, which are balls 55. The balls 55 are arranged in a line in the circumferential direction between the outer ring 53 and the inner ring 54. The balls 55 permit the outer ring 53 to rotate relative to the inner ring 54.

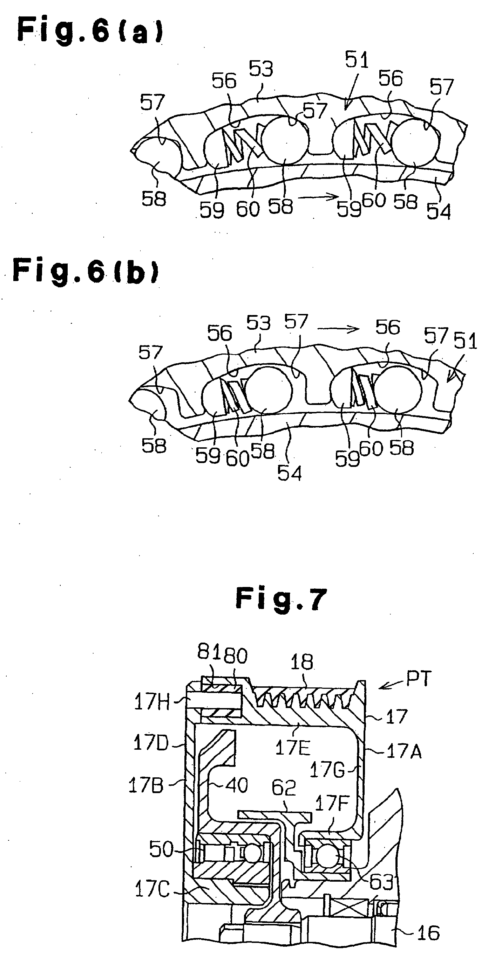

As shown in Figs. 6(a) and 6(b), the one-way clutch 51 includes accommodating recesses 56, which are formed in the inner circumferential surface of the outer ring 53. The accommodating recesses 56 are arranged at equal angular intervals about the axis of the drive shaft 16. A power transmission surface 57 is formed on one end (the leading end in the clockwise direction in Fig. 6(a)) of each accommodating recess 56. Each accommodating recess 56 accommodates a roller 58 the axis of which is parallel to the axis of the drive shaft 16. Each roller 58 is movable between a position in which the roller 58 engages with the corresponding power transmission surface 57 (see Fig. 6(a)), and a position apart from the engaging position (see Fig. 6(b)). A spring seat 59 is located at the end of each accommodating recess 56 opposite to the power transmission surface 57. A spring 60 is located between each spring seat 59 and the corresponding roller 58 to urge the roller 58 toward the engaging position.

As shown in Fig. 6(a), when the inner ring 54 is rotated in the direction shown by an arrow (clockwise direction) by the power transmitted from the engine E of the vehicle via the pulley 17, each roller 58 moves to the engaging position by the force of the corresponding spring 60. Then, each roller 58 is engaged between the power transmission surface 57 and the outer circumferential surface of the inner ring 54. The outer ring 53 is thus rotated in the same direction as the inner ring 54. Therefore, when the engine E of the vehicle is running, power of the engine E of the vehicle is transmitted to the drive shaft 16 via the pulley 17, one-way clutch 51, and the hub 40 so that the drive shaft 16 is always rotated.

When the engine E of the vehicle is stopped, that is, when the pulley 17 is stopped, if the outer ring 53 is rotated in the direction shown by an arrow (clockwise direction) as shown in Fig. 6(b), each roller 58 separates from the engaging position against the force of the corresponding spring 60. Therefore, the outer ring 53 runs idle with the inner ring 54.

As shown in Figs. 1 and 4, a support cylinder 12B projects from the front wall of the front housing member 12 of the compressor main body C to surround the front end of the drive shaft 16. A support 62A of a stator fixing member 62 is fitted to the support cylinder 12B. A second ball bearing, which is a bearing 63 in the first embodiment, is located between the support 62A and the second inner cylinder 17F of the upstream pulley member 17A. That is, the pulley 17 is supported by the one-way clutch unit 50 and the bearing 63, which are located axially separate from each other.

The stator fixing member 62 has a cylindrical mounting portion 62B for mounting a stator 61, which forms part of the motor generator MG, and a substantially disk-like coupling portion 62C, which couples the mounting portion 62B to the support 62A. The coupling portion 62C is located between the inner cylinders 17C, 17F in the axial direction of the drive shaft 16 and is located at the rear of the disk-like portion 40B. The mounting portion 62B is located radially outward of the cylindrical portion 40C and the second inner cylinder 17F.

The stator 61 is mounted on the outer circumferential surface of the mounting portion 62B. The stator 61 includes a fixed iron core and a coil, which is wound about the fixed iron core. A rotor 64, which forms part of the motor generator MG, is secured to the outer circumferential portion of the flange 40D. The rotor 64 is arranged about the stator 61. The rotor 64 includes a rotor core and a rotor conductor, which is secured to the rotor core. The motor generator MG is located in the internal space of the pulley 17.

The coil of the stator 61 is connected to a battery (not shown) via a motor drive circuit (not shown), which includes an inverter, converter, and the like. The motor drive circuit controls whether to store the power generated by the coil in the battery or to supply power from the battery to the coil in accordance with a command from a motor control unit, which is not shown.

When the battery needs to be charged while the engine E is running, the motor control unit controls the motor drive circuit such that the motor generator MG functions as an induction generator and the motor generator MG generates electric power. When the rotor 64 is rotated with the hub 40 by the power transmission from the engine E of the vehicle, electricity is generated at the coil and the electricity is stored in the battery via the motor drive circuit.

When the battery need not be charged while the engine E of the vehicle is running, the motor control unit controls the motor drive circuit such that the motor generator MG does not generate electricity. This is achieved when the motor control unit commands the motor drive circuit not to supply exciting current to the motor generator MG, which is formed by an induction machine. In this state, magnetic force does not act between the stator 61 and the rotor 64. Therefore, although the rotor 64 is rotated by the power from the engine E of the vehicle, energy loss, such as heat generation due to iron loss of the stator 61 and the rotor 64, is not caused. Although the rotor 64 is rotated by power from the engine E of the vehicle, torque fluctuation of the drive shaft 16 based on the magnetic force is not caused.

If it is determined, based on the external information, that air conditioning (cooling) is necessary while the engine E of the vehicle is stopped, the motor control unit controls the motor drive circuit such that the motor generator MG functions as an induction motor. That is, rotational force is generated at the rotor 64 by the power supplied from the motor drive circuit to the coil. The rotational force is transmitted to the drive shaft 16 via the hub 40. Accordingly, the vehicle passenger compartment can be air conditioned while the engine E of the vehicle is stopped.

When the motor generator MG functions as a motor and rotates the hub 40, the one-way clutch 51 operates to stop the power transmission between the hub 40 and the pulley 17. Thus, the power of the motor generator MG is prevented from being transmitted to the engine E of the vehicle.

In the first embodiment, drive force transmitted to the upstream pulley member 17A from the engine E of the vehicle is transmitted to the downstream pulley member 17B via the rubber damper 17J and the power transmission pins 17H. Since the rubber damper 17J is located on the power transmission path between the upstream pulley member 17A and the downstream pulley member 17B, misalignment between the axis of the bearing 52 and the axis of the bearing 63 is absorbed. That is, the deformation of the rubber damper 17J reduces stress generated on the bearings 12A, 52, and 63 due to the misalignment. The rubber damper 17J prevents the rotation vibration of the drive shaft 16 caused by the compression reaction force in the compression mechanism, or the torque fluctuation, from being transmitted from the downstream pulley member 17B to the upstream pulley member 17A.

Due to the operation of the one-way clutch 51 that permits transmission of power only in one rotational direction, the rotation vibration that acts in the other direction is not transmitted from the hub 40 to the pulley 17.

In the first embodiment, when the magnitude of the transmission torque between the upstream pulley member 17A and the downstream pulley member 17B is not large enough to affect the engine E of the vehicle, that is, during the normal power transmission state, power transmission from the engine E of the vehicle to the drive shaft 16 is continued. However, if an abnormality (such as a deadlock) occurs in the compressor main body C and the transmission torque exceeds an acceptable value, the power transmission pins 17H are broken by the excessive load, which stops power transmission from the upstream pulley member 17A to the downstream pulley member 17B. Accordingly, the engine E of the vehicle is prevented from being adversely affected by the excessive transmission torque.

The first embodiment provides the following advantages.

(1) The one-way clutch 51 is located on the power transmission path between the first inner cylinder 17C of the pulley 17 and the cylindrical portion 40C of the hub 40. Therefore, for example, as compared to a case where the electromagnetic clutch is located on the power transmission path between the pulley 17 and the hub 40, the size and the weight of the mechanism for selectively discontinuing power transmission between the drive shaft 16 and the pulley 17 are reduced. This facilitates reducing the size of the power transmission mechanism PT and reducing the size and weight of the compressor that includes the power transmission mechanism PT. Since a controller for selectively connecting and disconnecting the electromagnetic clutch is unnecessary, the structures of the power transmission mechanism PT and the compressor are simplified. This reduces the cost of the power transmission mechanism PT and the compressor.

(2) The motor generator MG is located in the internal space of the pulley 17 surrounded by the upstream pulley member 17A and the downstream pulley member 17B. Therefore, the size of the power transmission mechanism PT is reduced by effectively using the internal space.

(3) The first inner cylinder 17C and the second inner cylinder 17F are apart from each other in substantially the axial direction of the pulley 17. Therefore, for example, as compared to a case where the first inner cylinder 17C and the second inner cylinder 17F are located at the same axial position, a space for accommodating the motor generator MG is easily obtained.

(4) The first inner cylinder 17C and the second inner cylinder 17F, which are apart from each other in the axial direction, are supported by the bearings 52 and 63, respectively. Therefore, when an external force is applied to the pulley 17, the pulley 17 is prevented from being inclined with respect to the axis of the drive shaft 16. Thus, partial wear of each part of the pulley 17 and bad engagement of the one-way clutch 51 caused by the inclination of the pulley 17 are suppressed.

(5) The discontinuing mechanism is located on the power transmission path between the engine E of the vehicle and the drive shaft 16. Therefore, for example, although an abnormality, such as a deadlock, occurs in the compressor main body C, an excessive load is prevented form being applied to the engine E of the vehicle.

(6) The power transmission pins 17H located on the power transmission path between the upstream pulley member 17A and the downstream pulley member 17B break when the transmission torque is excessive to stop the power transmission. That is, in the first embodiment, the power transmission between the upstream rotating body and the downstream rotating body can be disconnected by breaking the breakable members, which are the power transmission pins 17H.

(7) The power transmission pins 17H are formed by sintered metal. Since the sintered metal has a relatively low ductility, the magnitude of the transmission torque required for breaking the power transmission pins 17H is easily set. The fatigue ratio $\sigma_W/\sigma_B$ of the sintered metal is relatively easily maintained at a high value. Therefore, during the normal power transmission state, the durability against repeated stress that acts on the power transmission pins 17H is maintained relatively high, and the balance between the durability and the transmission torque amount for breaking the power transmission pins 17H is easily optimized. Therefore, the power transmission pins 17H reliably transmit power during the normal power transmission state showing satisfactory durability and reliably blocks power when the transmission torque becomes excessive.

(8) The breakable members are simple pins 17H. Therefore, the structures of the breakable members and the through holes 17K are simplified, which facilitates the manufacture and reduces the cost of the power transmission mechanism PT.

(9) The elastic member, which is the rubber damper 17J, is located on the power transmission path between the upstream pulley member 17A and the downstream pulley member 17B. Therefore, deformation of the rubber damper 17J reduces the stress generated on the bearings 12A, 52, and 63 caused by the misalignment between the axis of the bearing 52 and the axis of the bearing 63 due to the manufacturing tolerance and the like. Therefore, the durability of the compressor is improved.

(10) The rubber damper 17J, which serves as a buffer member, reduces the torque fluctuation that is transmitted from the downstream pulley member 17B to the upstream pulley member 17A.

(11) The bearing 52 is formed by balls 55, which are arranged in a line in the circumferential direction between the outer ring 53 and the inner ring 54. Therefore, for example, as compared to a structure in which balls 55 are arranged in the axial direction of the bearing 52, the axial length of the bearing 52 is reduced.

(12) The compressor main body C reduces the discharge displacement per one rotation of the drive shaft 16 to substantially zero. Since the discharge displacement of the compressor main body C during rotation of the drive shaft 16 is reduced to substantially zero, unnecessary load is hardly applied to the engine E of the vehicle when air conditioning is not required.

(13) According to the control valve 35 of the first embodiment, the discharge displacement (flow rate of refrigerant) of the compressor main body C per unit time, which greatly affects the load torque of the compressor main body C, is controlled directly from the outside. Also, for example, the flow rate of refrigerant is controlled to be less than or equal to a predetermined amount in an accurate and responsive manner without using a refrigerant flow rate sensor or the like.

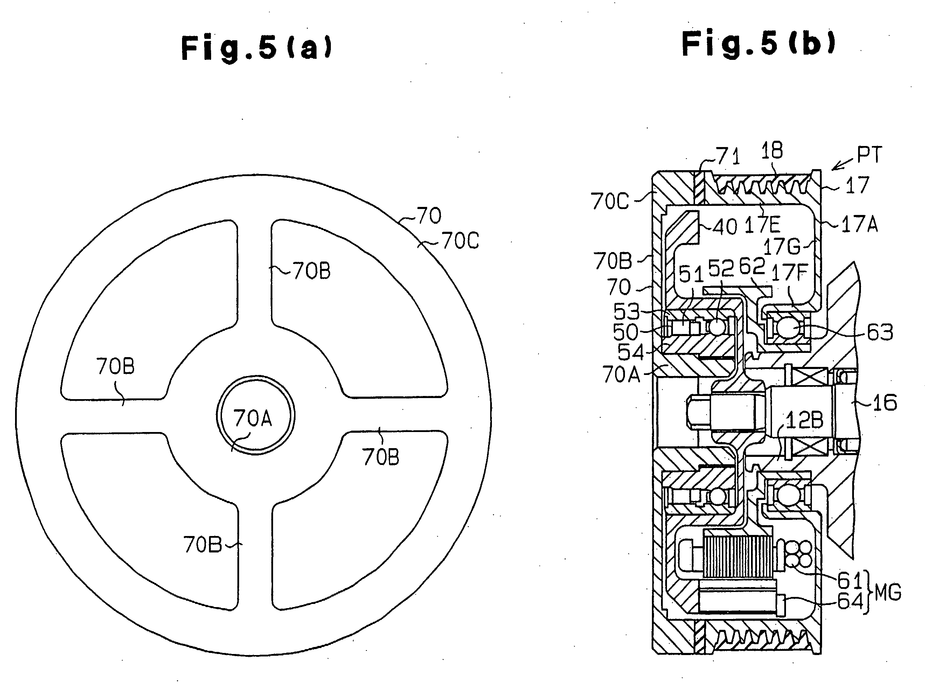

A second embodiment of the present invention will now be described with reference to Figs. 5(a) and 5(b). A compressor of the second embodiment has the same structure as the first embodiment except that mainly the downstream pulley member and the structure of the coupling portion between the downstream pulley member and the upstream pulley member are modified. Therefore, like or the same reference numerals are given to those components that are like or the same as the corresponding components of the first embodiment, and detailed explanations are omitted.

As shown in Figs. 5(a) and 5(b), a downstream rotating body, which is a downstream pulley member 70 in the second embodiment, has a first inner cylinder 70A, which is fitted in the inner ring 54 of the one-way clutch unit 50. The downstream pulley member 70 also has an outer ring 70C, which is formed integrally with the first inner cylinder 70A via breakable members, which are spokes 70B in the second embodiment. The spokes 70B (four in the second embodiment) extend from the first inner cylinder 70A radialy toward the outer ring 70C. The spokes 70B couple the first inner cylinder 70A to the outer ring 70C to permit power transmission.

In the second embodiment, the downstream pulley member 70, which includes the integrally formed first inner cylinder 70A, the spokes 70B, and the outer ring 70C, is made by sintered metal. The sintered metal is set such that the fatigue ratio $\sigma_W/\sigma_B$ is maintained approximately at 0.5.

The annular elastic member, which is the rubber damper 71, is located between the rear end of the outer ring 70C and the front end of the outer cylinder 17E of the upstream pulley member 17A. The rubber damper 71 is fixed to the outer ring 70C and the outer cylinder 17E.

In the second embodiment, the drive force transmitted from the engine E of the vehicle to the upstream pulley member 17A is transmitted to the hub 40 via the rubber damper 71, the outer ring 70C, and the spokes 70B. That is, the rubber damper 71 and the spokes 70B are located on the power transmission path between the upstream pulley member 17A and the hub 40. The rubber damper 71 absorbs misalignment between the axis of the bearing 52 and the axis of the bearing 63. The rubber damper 71 prevents the torque fluctuation from being transmitted from the downstream pulley member 70 to the upstream pulley member 17A.

In the second embodiment, when the transmission torque between the outer ring 70C of the downstream pulley member 70 and the first inner cylinder 70A is not large enough to affect the engine E of the vehicle, that is, during normal power transmission state, the power transmission from the engine E to the drive shaft 16 is continued. However, if an abnormality (such as a deadlock) occurs in the compressor main body C and the transmission torque exceeds the acceptable value, the spokes 70B are broken by the excessive load, which stops the power transmission from the upstream pulley member 17A to the hub 40. Accordingly, the engine E of the vehicle is prevented from being adversely affected by the excessive transmission torque.

The second embodiment provides the following advantage in addition to the advantages (1) to (7) and (9) to (13) of the first embodiment.

(14) Since the power transmission can be stopped by breaking the downstream pulley member 70, a breakable member formed by a member other than the downstream pulley member 70 need not be provided. Therefore, a procedure for mounting the breakable member formed by another member to the downstream pulley member 70 is omitted.

It should be apparent to those skilled in the art that the present invention may be embodied in many other specific forms without departing from the spirit or scope of the invention. Particularly, it should be understood that the invention may be embodied in the following forms.

In the first embodiment, the pulley 17 has the upstream pulley member 17A and the downstream pulley member 17B, and the breakable members, which are the power transmission pins 17H, are located on the power transmission path between the upstream pulley member 17A and the downstream pulley member 17B. On the contrary, the hub 40 may have an upstream rotating body and a downstream rotating body, and a breakable member may be located on a power transmission between the rotating bodies.

In the second embodiment, the downstream pulley member 70 is formed of sintered metal. The power transmission is stopped when the downstream pulley member 70 is broken. However, the hub 40 may be made of sintered metal, and the power transmission may be stopped when the hub 40 is broken.

The compressor according to the first and second embodiments includes the discontinuing mechanism on the pulley 17 (70). On the contrary, the discontinuing mechanism may be located on a power transmission path between the pulley 17 (70) and the hub 40, such as a power transmission path between the pulley 17 and the one-way clutch unit 50, or between the one-way clutch unit 50 and the hub 40. The discontinuing mechanism may be located on the one-way clutch unit 50. The discontinuing mechanism may be located on a power transmission path between the hub 40 and the drive shaft 16.

In the above embodiments, the fatigue ratio $\sigma_W/\sigma_B$ of the sintered metal that form the breakable member is maintained approximately at 0.5. However, the fatigue ratio may be varied as long as the breakable member can be broken when the excessive transmission torque is applied to the breakable member.

In the above embodiments, the breakable member is made by sintered metal. However, the breakable member may be formed by low-carbon steel. The fatigue ratio $\sigma_W/\sigma_B$ of low-carbon steel is relatively easy to maintain at a relatively high value (approximately 0.5). Therefore, during the normal power transmission state, the durability against the repeated stress that acts on the breakable member is maintained relatively high, and the balance between the durability and the transmission torque amount for breaking the power transmission pins 17H is easily optimized.

In the above embodiments, the breakable member is made of metal. However, the breakable member may be made of resin or ceramics as long as the breakable member can be broken at a predetermined transmission torque when an excessive transmission torque is applied to the breakable member.

In the first embodiment, the power transmission pins 17H may be formed integrally with the downstream pulley member 17B. When the downstream pulley member 17B, to which the power transmission pins 17H are integrally formed, is made by breakable material such as sintered metal, the power transmission can be stopped by breaking of the portion corresponding to the power transmission pins 17H.

In the first embodiment, the power transmission pins 17H are fixed to the downstream pulley member 17B and coupled to the upstream pulley member 17A via the rubber damper 17J. On the contrary, the power transmission pins 17H may be fixed to the upstream pulley member 17A and coupled to the downstream pulley member 17B via the rubber damper 17J.

In the first embodiment, the power transmission pins 17H may be attached to the downstream pulley member 17B via a tubular elastic member such as a rubber damper. That is, the power transmission pins 17H may be coupled to both the upstream pulley member 17A and the downstream pulley member 17B via the elastic member.

In the first embodiment, all the power transmission pins 17H are coupled to one rubber damper 17J. However, each power transmission pin 17H may be coupled to separate rubber damper. For example, the power transmission pins 17H may be formed as shown in Fig. 7. A tubular elastic member having a circular cross-section, which is a rubber damper 80, is fitted to the rear end of each power transmission pin 17H. Each rubber damper 80 is accommodated in a damper accommodating recess 81 formed in the front end of the outer cylinder 17E of the upstream pulley member 17A. In this case, as compared to the first embodiment, the amount of rubber material used for forming the rubber damper is reduced.

The cross-sections of the power transmission pins 17H and the hole of the rubber damper 17J (71, 80) need not be circular. The cross-section of the outline of the rubber damper 80 shown in Fig. 7, in particular, need not be circular.

In the first and second embodiments, the breakable member and the elastic member are separate members. However, the elastic member may also serve as the breakable member. For example, in the first embodiment, the upstream pulley member 17A and the downstream pulley member 17B may be coupled to each other via only the rubber damper 17J. In this case, if an excessive transmission power is applied to the rubber damper 17J, the power transmission is stopped when the rubber damper 17J is pulled apart.

In the above embodiments, the elastic member is located on the pulley 17 but may be located on the hub 40. For example, the elastic member may be located on a power transmission path between the one-way clutch unit 50 and the drive shaft 16. The elastic member may also be located on a power transmission path between the pulley 17 and the one-way clutch unit 50, or between the one-way clutch unit 50 and the hub 40. The elastic member may be located on the power transmission path between the hub 40 and the drive shaft 16.

The elastic member may be formed of elastic material other than rubber such as elastomer.

The elastic member for absorbing misalignment between the axis of the bearing 52 and the axis of the bearing 63 may be omitted.

In the above embodiments, the discontinuing mechanism is formed by a breakable member. However, the discontinuing mechanism need not be a breakable member. For example, the discontinuing mechanism may be formed by a coupling member that operably couples the upstream rotating body to the downstream rotating body and selectively engages with and disengages from one of the rotating bodies.

The structure of the one-way clutch 51 may be modified as long as the power transmission from the pulley 17 to the drive shaft 16 is permitted and the power transmission from the motor generator MG to the pulley 17 is prevented.

A motor generator that utilizes a permanent magnet may be employed instead of the motor generator MG that is formed by an induction machine. The motor generator that uses a permanent magnet easily obtains a great output as compared to the motor generator that is formed by an induction machine.

An electric part that functions only as a motor may be employed instead of the electric part that functions as a motor and a generator.

The motor generator MG need not be located inside the internal space of the pulley 17 but may be located outside the pulley 17.

The first inner cylinder 17C (70A) and the second inner cylinder 17F may be located at substantially the same position in the axial direction.

The bearing 52 may have multiple lines of balls 55.

In the above embodiments, the position of the valve body 106 is adjusted by applying the pressure in the pressure sensing chamber 114 to the movable wall 120 accommodated in the pressure sensing chamber 114. On the contrary, the pressure in the pressure sensing chamber 114 may be applied to a pressure sensing member such as a bellows or a diaphragm located inside the pressure sensing chamber 114 to adjust the axial position of the valve body 106.

In the above embodiments, the control valve 35 is designed such that the position of the valve body 106 is automatically changed to vary the displacement to cancel the fluctuation of the pressure difference between two pressure monitoring points P1, P2 located in the refrigerant circuit. On the contrary, for example, the position of the valve body 106 may be changed in accordance with the pressure of one pressure monitoring point located in the refrigerant circuit. Also, for example, the position of the valve body 106 may be changed in accordance with a command from the outside.

In the above embodiments, the control valve 35 is designed such that the criteria of the positioning operation of the valve body 106 can be changed by an external control. On the contrary, for example, the control valve 35 may be designed to perform only the automatic positioning operation of the valve body 106 without being controlled from the outside.

Instead of providing the control valve 35 in the supply passage, a control valve may be located in the bleed passage 33. In this case, the control valve in the bleed passage adjusts the flow rate of refrigerant from the crank chamber 15 to the suction chamber 27 to control the crank pressure Pc. That is, the control valve may be located at any place as long as the control valve is located in at least one of the supply passage and the bleed passage connected to the crank chamber 15. The discharge chamber 28 and the suction chamber 27 are pressure zones, which are exposed to pressure that is different from the crank pressure Pc. The supply passage and the bleed passage are pressure control passages, which connect the pressure zone to the control pressure zone, which is the crank chamber 15.

The single-sided compressor main body C, which causes single-headed pistons to perform the compression operation, may be changed to a both-sided compressor main body, which causes double-headed pistons to perform the compression operation in cylinder bores formed on both sides of a crank chamber.

The present invention may be embodied in a compressor that has a drive plate that is rotatably supported by the drive shaft to wobble with respect to the drive shaft. For example, the present invention may be embodied in a wobble plate type compressor.

The discharge displacement per one rotation of the drive shaft 16 may be greater than zero at the minimum displacement of the compressor main body C.

The compressor main body C may be changed to a fixed displacement compressor main body in which the stroke of the pistons 25 is constant.

The present invention may be embodied in rotary compressors such as a scroll compressor.

The first rotating body, which is the pulley 17, may be changed to, for example, a sprocket or a gear.

## EP 1 431 579 A1

**Claims**

1. A compressor, comprising:

   a compressor main body, wherein the compressor main body includes a housing and a drive shaft, which is supported by the housing, and wherein the compressor main body compresses refrigerant in accordance with rotation of the drive shaft;
   an electric part, wherein the electric part at least functions as a motor;
   a first rotating body, wherein the first rotating body is rotated by an external drive source;
   a second rotating body secured to the drive shaft to rotate integrally with the drive shaft, wherein the second rotating body is operably coupled to the first rotating body, and wherein power is directly transmitted from the electric part to the second rotating body;
   a first cylinder and a second cylinder located on the first rotating body, wherein the first cylinder and the second cylinder are apart from each other;
   a one-way clutch located on a power transmission path between the first cylinder and the second cylinder;
   a first ball bearing located between the first cylinder and the second rotating body;
   a second ball bearing located between the second cylinder and the housing; and
   a discontinuing mechanism located on a power transmission path between the external drive source and the drive shaft, wherein the discontinuing mechanism discontinues excessive torque transmission from the external drive source to the drive shaft.

2. The compressor according to claim 1, further comprising an elastic member for absorbing misalignment between the axis of the first ball bearing and the axis of the second ball bearing.

3. The compressor according to claim 1 or 2, wherein the discontinuing mechanism includes a breakable member, and wherein the breakable member breaks when torque transmitted from the external drive source to the drive shaft is excessive.

4. The compressor according to claim 3, wherein the breakable member is made of sintered metal or low-carbon steel.

5. The compressor according to claim 3 or 4, wherein at least part of the first rotating body or at least part of the second rotating body functions as the breakable member.

6. The compressor according to claim 5, wherein at least one of the first rotating body and the second rotating body has an upstream rotating body and a downstream rotating body, wherein the upstream rotating body is located upstream of the downstream rotating body in the power transmission path between the external drive source and the drive shaft, and wherein the breakable member is located in a power transmission path between the upstream rotating body and the downstream rotating body.

7. The compressor according to any one of claims 1 to 6, wherein the first ball bearing has a plurality of rolling elements arranged in a line in the circumferential direction of the first ball bearing.

8. The compressor according to any one of claims 1 to 7, wherein the electric part is located inside the first rotating body.

9. The compressor according to claim 8, wherein the first cylinder and the second cylinder are separate from each other in the axial direction of the first rotating body.

10. The compressor according to any one of claims 1 to 9, wherein the compressor main body is designed such that the discharge displacement per one rotation of the drive shaft can be varied.

11. The compressor according to claim 10, wherein the compressor main body is connected to an external refrigerant circuit, and wherein the compressor main body and the external refrigerant circuit form a refrigerant circuit, the compressor main body includes:

    a control pressure zone, wherein the discharge displacement per one rotation of the drive shaft is varied in accordance with the pressure in the control pressure zone;
    a pressure control passage, wherein the pressure control passage connects the control pressure zone to a pressure zone, which is exposed to pressure that is different from the pressure in the control pressure zone; and a control valve located in the pressure control passage, wherein the control valve adjusts the opening degree of the pressure control passage to control the pressure in the control pressure zone.

**12.** The compressor according to claim 11, wherein the control valve includes:

a valve body;
a pressure sensing member, wherein the pressure sensing member is displaced in accordance with the pressure difference between two pressure monitoring points located in the refrigerant circuit, wherein the pressure sensing member moves the valve body in accordance with the pressure difference, and wherein the discharge displacement per one rotation of the drive shaft is varied to cancel the fluctuation of the pressure difference; and an actuator, wherein the actuator urges the pressure sensing member in accordance with an external command, and wherein the force of the actuator exerted against the pressure sensing member reflects a target value of the pressure difference.

**13.** The compressor according to any one of claims 10 to 12, wherein the compressor main body is designed such that the discharge displacement per one rotation of the drive shaft can be varied to substantially zero.

# Fig.1

EP 1 431 579 A1

# Fig.2

# Fig.3

# Fig.4

# Fig.5(a)

# Fig.5(b)

EP 1 431 579 A1

# Fig.6(a)

# Fig.6(b)

# Fig.7

EP 1 431 579 A1

**INTERNATIONAL SEARCH REPORT**

International application No.

PCT/JP02/10040

A. CLASSIFICATION OF SUBJECT MATTER
Int.Cl⁷ F04B35/01

According to International Patent Classification (IPC) or to both national classification and IPC

B. FIELDS SEARCHED

Minimum documentation searched (classification system followed by classification symbols)
Int.Cl⁷ F04B35/01, F16D9/06

Documentation searched other than minimum documentation to the extent that such documents are included in the fields searched
Jitsuyo Shinan Koho        1922-1996   Toroku Jitsuyo Shinan Koho   1994-2002
Kokai Jitsuyo Shinan Koho   1971-2002   Jitsuyo Shinan Toroku Koho   1996-2002

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2596291 Y2 (Calsonic Corp.),<br>02 April, 1999 (02.04.99),<br>Par. No. [0013]; Fig. 1<br>(Family: none) | 1-13 |
| Y | WO 01/36824 A1 (Zexel Valeo Climate Control Corp.),<br>25 May, 2001 (25.05.01),<br>Description, page 8, lines 15 to 19; Figs. 3 to 5<br>& JP 2001-140757 A | 1-13 |
| Y | JP 11-93876 A (Denso Corp.),<br>06 April, 1999 (06.04.99),<br>Par. No. [0018]; Fig. 3<br>(Family: none) | 1-13 |

☒ Further documents are listed in the continuation of Box C.      ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
11 December, 2002 (11.12.02)

Date of mailing of the international search report
24 December, 2002 (24.12.02)

Name and mailing address of the ISA/
Japanese Patent Office

Facsimile No.

Authorized officer

Telephone No.

Form PCT/ISA/210 (second sheet) (July 1998)

22

## INTERNATIONAL SEARCH REPORT

| International application No. |
| --- |
| PCT/JP02/10040 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | JP 9-42411 A (Ogura Clutch Co., Ltd.),<br>14 February, 1997 (14.02.97),<br>Par. Nos. [0016] to [0018]; Fig. 3<br>(Family: none) | 1-3,5-13 |
| Y | JP 2001-41308 A (Denso Corp.),<br>13 February, 2001 (13.02.01),<br>Par. No. [0016]; Figs. 1 to 11<br>& US 6332842 B1 | 1,3-13 |
| Y | EP 1101639 A1 (Kabushiki Kaisha toyoda Jidoshokki Seisakusho),<br>23 May, 2001 (23.05.01),<br>Full text; Figs. 1 to 9<br>& JP 2001-14767 A | 11-13 |

Form PCT/ISA/210 (continuation of second sheet) (July 1998)